# EUROPEAN PATENT SPECIFICATION

(11) **EP 4 190 970 B1**
(45) Date of publication and mention of the grant of the patent: **04.09.2024**
(21) Application number: 22210740.1
(22) Date of filing: 01.12.2022
(51) Int. Cl.: D21H 17/21, D21B 1/30, D21H 17/28, D21H 17/00, D21J 3/00

(54) **BUFFER MATERIAL AND METHOD OF PRODUCING BUFFER MATERIAL**
PUFFERMATERIAL UND VERFAHREN ZUR HERSTELLUNG VON PUFFERMATERIAL
MATÉRIAU TAMPON ET PROCÉDÉ DE PRODUCTION DE MATÉRIAU TAMPON

(30) Priority: 03.12.2021 JP 2021196718
(43) Date of publication of application: 07.06.2023
(73) Proprietor: Seiko Epson Corporation, Tokyo 160-8801 (JP)
(72) Inventor: OTA, Tsukasa, Suwa-shi, 392-8502 (JP); TAKESHITA, Sanshiro, Suwa-shi, 392-8502 (JP); OHASHI, Hiroshi, Suwa-shi, 392-8502 (JP); KAMIGAKI, Shinya, Suwa-shi, 392-8502 (JP)
(74) Representative: Lewis Silkin LLP

(56) References cited:
- EP-A1- 3 889 348
- EP-A1- 3 978 562
- EP-A2- 3 913 017
- US-A1- 2021 301 465

## Description

The present application is based on, and claims priority from JP Application Serial Number 2021-196718, filed December 3, 2021.

### BACKGROUND

### 1. Technical Field

The present disclosure relates to a buffer material and a method of producing a buffer material.

### 2. Related Art

In recent years, there has been a demand for a buffer material with a reduced environmental load in place of plastic materials. In the related art, a processing method of reusing used paper has been known. For example, JP-A-9-220709 suggests a used paper board obtained by mixing used paper pulp fibers obtained by defibrating used paper with fibers of a thermoplastic resin using a dry type method to form a web with the obtained fiber assembly using a dry type method, heating the web to higher than or equal to the melting point of the fibers of the thermoplastic resin, performing compression molding on the web, and melting some or all the fibers of the thermoplastic resin to bind the used paper pulp fibers.

However, in the used paper board disclosed in JP-A-9-220709, a thermoplastic resin which is not a naturally derived material is used to bind used paper pulp fibers, and thus reduction in environmental load is insufficient. Further, the used paper board described in JP-A-9-220709 is difficult to recycle. Therefore, a buffer material that can further reduce the environmental load and can be suitably recycled is required. Further, attempts have been made to produce a buffer material formed of only naturally derived components, but significant deformation such as buckling easily occurs due to a relatively small external force at the moment, and thus a material that can be practically used as a buffer material has not been known.

### SUMMARY

The present disclosure has been made to solve the above-described problems and can be realized as the following aspects.

According to an aspect of the present disclosure, there is provided a buffer material as set out in the appended set of claims.

Further, according to another aspect of the present disclosure, there is provided a method of producing a buffer material, as is also set out in the appended set of claims.

### BRIEF DESCRIPTION OF THE DRAWINGS

FIG. 1 is a perspective view showing the buffer material according to a suitable embodiment.
FIG. 2 is a partially enlarged cross-sectional view which is a view for describing the buffer function and showing the buffer material of FIG. 1.
FIG. 3 is a partially enlarged cross-sectional view which is a view for describing the buffer function and showing the buffer material of FIG. 1.
FIG. 4 is a view schematically showing an example of a production device capable of producing a buffer material.

### DESCRIPTION OF EXEMPLARY EMBODIMENTS

Hereinafter, preferred embodiments of the present disclosure will be described in detail.

Examples of the present disclosure will be described in the embodiments described below. The present disclosure is not limited to the following embodiments and include various modifications within a range not departing from the scope of the present disclosure. Further, configurations described below may not all necessarily be essential configurations.

### 1. Buffer material

First, a buffer material will be described.

The buffer material according to the present embodiment is a buffer material containing cellulose fibers and a binding material that binds the cellulose fibers, in which the binding material contains starch and natural wax.

With such a configuration, a buffer material capable of reducing the environmental load can be provided. Further, the buffer material can be suitably recycled. Further, a buffer material with an enhanced strength, excellent buckling resistance, and an excellent buffer function can be provided. Further, such a buffer material also has moderate water repellency, excellent water resistance, and excellent durability in a humid environment.

On the contrary, satisfactory results cannot be obtained when the above-described condition is not satisfied.

For example, when only starch is used as the binding material, the strength required for the buffer material is difficult to obtain, and thus the buckling resistance and the buffer function are degraded. Further, the water repellency is significantly decreased, and thus the water resistance and the durability in a humid environment are significantly degraded.

Further, when only natural wax is used as the binding material, the disaggregation property of the buffer material in water is significantly degraded, and thus the buffer material is difficult to recycle.

Further, even when a natural component other than natural wax is used in place of natural wax and a combination of the natural component and starch is used, the strength required for the buffer material is difficult to obtain in a case where natural wax is used in combination, and thus the buckling resistance and the buffer function are degraded. Further, the water repellency is significantly decreased, and thus the water resistance and the durability in a humid environment are significantly degraded.

Further, even when a natural component other than starch is used in place of starch and a combination of the natural component and natural wax is used, the strength required for the buffer material is difficult to obtain in a case where starch is used in combination, and thus the buckling resistance and the buffer function are degraded and the buffer material is difficult to suitably recycle.

### 1-1. Cellulose fibers

The buffer material according to the present embodiment contains cellulose fibers.

The cellulose fibers are an abundant natural material derived from a plant, and it is preferable that the cellulose fibers be used as fibers from the viewpoints of suitably dealing with the environmental problems, saving reserve resources, stably supplying the buffer material, reducing the cost, and the like. Further, the cellulose fibers have a particularly high theoretical strength among various fibers and are also advantageous from the viewpoint of improving the strength of the buffer material.

Typically, cellulose fibers are mainly formed of cellulose, but may contain components other than cellulose. Examples of such components include hemicelluloses and lignin.

Here, the content of lignin in the cellulose fibers is preferably 5.0% by mass or less, more preferably 3.0% by mass or less, and still more preferably 1.0% by mass or less.

In this manner, buffering performance, particularly compression characteristics, of the buffer material is further improved.

The content of the cellulose in the cellulose fibers is preferably 50.0% by mass or greater, more preferably 60.0% by mass or greater, and still more preferably 80.0% by mass or greater.

For example, fibers which have been subjected to a bleaching treatment or the like may be used as the cellulose fibers. Further, the cellulose fibers may have been subjected to a treatment such as an ultraviolet irradiation treatment, an ozone treatment, or a plasma treatment.

As the cellulose fibers, chemical cellulose fibers such as organic cellulose fibers, inorganic cellulose fibers, and organic-inorganic composite cellulose fibers may be used in addition to the natural cellulose fibers such as animal cellulose fibers and plant cellulose fibers. More specifically, examples of the cellulose fibers include cellulose fibers consisting of cellulose, cotton, cannabis, kenaf, linen, ramie, jute, manila hemp, sisal hemp, conifer, and hardwood. These cellulose fibers may be used alone or in the form of a mixture as appropriate, or may be used as regenerated cellulose fibers which have been purified or the like. Further, the cellulose fibers may be subjected to various surface treatments.

The average length of the cellulose fibers is not particularly limited, but is preferably 10 µm or greater and 50 mm or less, more preferably 20 µm or greater and 5.0 mm or less, and still more preferably 30 µm or greater and 3.0 mm or less in terms of the length-length weighted average cellulose fiber length.

In this manner, the stability of the shape of the buffer material, the strength of the buffer material, and the like can be further improved. Further, the buffering performance of the buffer material can be further improved.

When the cellulose fibers contained in the buffer material of the present embodiment are considered to be one independent cellulose fiber, the average thickness thereof is preferably 1.0 µm or greater and 1000 µm or less and more preferably 2.0 µm or greater and 100.0 µm or less.

In this manner, the stability of the shape of the buffering material, the strength of the buffer material, and the like can be further improved. Further, the buffering performance of the buffer material can be further improved. Further, it is possible to more effectively prevent the surface of the buffer material from being unexpectedly uneven.

Further, when a cross section of the cellulose fiber is not circular, a circle having the same area as the area of the cross section is assumed, and the diameter of the circle is used as the thickness of the cellulose fiber.

The average aspect ratio of the cellulose fibers, that is, the average length with respect to the average thickness is not particularly limited, but is preferably 10 or greater and 1000 or less and more preferably 15 or greater and 500 or less.

In this manner, the stability of the shape of the buffering material, the strength of the buffer material, and the like can be further improved. Further, the buffering performance of the buffer material can be further improved. Further, it is possible to more effectively prevent the surface of the buffer material from being unexpectedly uneven.

In the present specification, the term "cellulose fibers" denote a single cellulose fiber or an aggregate of a plurality of cellulose fibers. Further, the cellulose fibers may be cellulose fibers loosened into fibers by performing a defibration treatment on a material to be defibrated, that is, a defibrated material. Examples of the material to be defibrated here include cellulose fibers obtained by being entangled or bound, such as pulp sheets, paper, used paper, tissue paper, kitchen paper, cleaners, filters, liquid absorbing materials, sound absorbing bodies, buffer materials, mats, and corrugated cardboard.

The content of the cellulose fibers in the buffer material is 60.0% by mass or greater and 89.0% by mass or less, more preferably 63.0% by mass or greater and 87.0% by mass or less, and still more preferably 65.0% by mass or greater and 84.0% by mass or less.

In this manner, the strength and the buffering performance of the buffer material can be further improved.

### 1-2. Binding material

The buffer material according to the present embodiment contains the above-described cellulose fibers and a binding material that binds the cellulose fibers.

The binding material may further have other functions in addition to the function of binding the cellulose fibers. More specifically, the binding material may have a function of suppressing a component other than the cellulose fibers, for example, a colorant or the like described below from falling off from the buffer material. In addition, a part of the binding material contained in the buffer material may be in a state where the above-described functions are not exhibited.

The content of the binding material in the buffer material is preferably 11.0% by mass or greater and 40.0% by mass or less, more preferably 13.0% by mass or greater and 37.0% by mass or less, and still more preferably 16.0% by mass or greater and 35.0% by mass or less.

In this manner, the strength and the buffering performance of the buffer material can be further improved.

The binding material constituting the buffer material according to the present embodiment contains starch and natural wax.

### 1-2-1. Starch

The starch is a polymer material obtained by polymerizing a plurality of α-glucose molecules with glycoside bonds. The starch may be linear or branched.

For example, starch derived from various plants can be used as the starch. Examples of raw materials of starch include cereals such as corn, wheat, and rice, beans such as broad beans, mung beans, and adzuki beans, tubers such as potatoes, sweet potatoes, and tapioca, wild grasses such as dogtooth violet, bracken, and kadzu, and palms such as sago palm.

For example, processed starch or modified starch may be used as the starch. Examples of the processed starch include acetylated adipic acid crosslinked starch, acetylated starch, oxidized starch, sodium octenyl succinate starch, hydroxypropyl starch, hydroxypropylated phosphoric acid crosslinked starch, phosphorylated starch, phosphoric acid monoesterified phosphoric acid crosslinked starch, urea phosphorylated esterified starch, sodium starch glycolate, and high amylose cornstarch. Further, examples of the modified starch include pregelatinized starch, dextrin, laurylpolyglucose, cationized starch, thermoplastic starch, and carbamic acid starch.

The content of the starch in the buffer material is 10.0% by mass or greater, more preferably 12.0% by mass or greater and 29.9% by mass or less, and still more preferably 15.0% by mass or greater and 28.0% by mass or less.

In this manner, the strength and the buffering performance of the buffer material can be further improved, the disaggregation property of the buffer material in water can be made more suitable, and thus the buffer material can be more suitably recycled.

### 1-2-2. Natural wax

Examples of the natural wax include carnauba wax, candelilla wax, and rice wax, and one or two or more selected from these can be used in combination. Among these, carnauba wax is preferable as the natural wax.

In this manner, the strength and the buffering performance of the buffer material can be further improved, the water repellency of the buffer material can be made more suitable, and thus the water resistance and the durability in a humid environment can be further improved.

Particularly, the proportion of the carnauba wax in the entire natural wax contained in the buffer material is preferably 50.0% by mass or greater, more preferably 80.0% by mass or greater, and still more preferably 90.0% by mass or greater.

In this manner, the above-described effects are more significantly exhibited.

The content of the natural wax in the buffer material is 0.1% by mass or greater and 25.0% by mass or less, more preferably 0.2% by mass or greater and 22.0% by mass or less, and still more preferably 0.5% by mass or greater and 20.0% by mass or less.

In this manner, the strength and the buffering performance of the buffer material can be sufficiently improved, the water repellency of the buffer material can be made more suitable, and thus the water resistance and the durability in a humid environment can be further improved.

When the content of the starch in the buffer material is set as XS [% by mass] and the content of the natural wax in the buffer material is set as XW [% by mass], it is preferable to satisfy a relationship of 0.40 ≤ XS/XW ≤ 500.0, more preferable to satisfy a relationship of 0.55 ≤ XS/XW ≤ 140.0, and still more preferable to satisfy a relationship of 0.75 ≤ XS/XW ≤ 55.0.

In this manner, the balance between the strength and the buffering performance of the buffer material, the disaggregation of the buffer material in water, the water repellency of the buffer material, and the like can be made more suitable, and thus the water resistance and the durability in a humid environment can be further improved.

### 1-2-3. Natural components other than starch and natural wax

The binding material constituting the buffer material according to the present embodiment is not limited as long as the binding material contains starch and natural wax, and may further contain other components. Hereinafter, such components will also be referred to as "other binding components".

Examples of other binding components include natural resins such as rosin, dammar, mastic, copal, amber, a shellac resin, dragon tree, sandarac, and colophonium, modified products thereof, and various synthetic resins such as thermoplastic resins, thermosetting resins, and photocurable resins. Among these, one or two or more selected from among these can be used in combination.

Here, the proportion of other binding components in the entire binding material contained in the buffer material is preferably 7.0% by mass or less, more preferably 5.0% by mass or less, and still more preferably 3.0% by mass or less.

Particularly, it is preferable that the binding material do not substantially contain a synthetic resin.

### 1-3. Other components

The buffer material of the present embodiment is not limited as long as the buffer material contains cellulose fibers and the above-described binding material, but may further contain other components in addition the above-described components. Hereinafter, such components will also be referred to as "other components".

Examples of other components include a flame retardant, a colorant, an aggregation inhibitor, a surfactant, a fungicide, a preservative, an antioxidant, an ultraviolet absorbing agent, and an oxygen absorbing agent.

The content of other components in the buffer material is preferably 7.0% by mass or less, more preferably 5.0% by mass or less, and still more preferably 3.0% by mass or less.

### 1-4. Properties and the like of buffer material

The buffer material of the present embodiment may have any size and any shape. For example, the buffer material may have a sheet shape or a three-dimensional shape.

Further, the buffer material of the present embodiment may be, for example, processed into a predetermined three-dimensional shape by performing treatments, such as molding with a molding die, cutting, bending, notching, organizing, and the like as necessary, on the sheet-like buffer material which has been prepared in advance.

As described above, when the buffer material has a three-dimensional shape and is produced from a sheet-like buffer material, the three-dimensional buffer material may be produced by superimposing a plurality of sheet-like buffer materials.

The thickness of the buffer material, that is, the thickness of a portion formed of the material containing cellulose fibers and the above-described binding material is not particularly limited, but is preferably 1.0 mm or greater and 100 mm or less, more preferably 1.5 mm or greater and 30 mm or less, and still more preferably 2.0 mm or greater and 20 mm or less.

In this manner, the strength and the rigidity of the buffer material can be further improved. Further, for example, the workability when the sheet-like buffer material is processed into a buffer material having a three-dimensional shape by carrying out a process of deep drawing or the like can be further improved, and occurrence of wrinkles or breakage can be more effectively prevented.

The density of the buffer material is not particularly limited, but is preferably 0.02 g/cm³ or greater and 0.20 g/cm³ or less, more preferably 0.03 g/cm³ or greater and 0.15 g/cm³ or less, and still more preferably 0.05 g/cm³ or greater and 0.11 g/cm³ or less.

In this manner, the strength and the rigidity of the buffer material can be further improved. Further, the durability of the buffer material against an impact can be further improved. Further, for example, the workability when the sheet-like buffer material is processed into a buffer material having a three-dimensional shape by carrying out a process of deep drawing or the like can be further improved, and occurrence of wrinkles or breakage can be more effectively prevented.

Particularly when the buffer material satisfies the above-described conditions for the thickness and the above-described conditions for the density, the effects obtained by satisfying the conditions are synergistically enhanced so that the above-described effects are more significantly exhibited.

The basis weight of the buffer material is not particularly limited, but is preferably 100 g/m² or greater and 600 g/m² or less, more preferably 150 g/m² or greater and 500 g/m² or less, and still more preferably 150 g/m² or greater and 400 g/m² or less.

In this manner, the strength and the rigidity of the buffer material can be further improved. Further, the durability of the buffer material against an impact can be further improved. Further, for example, the workability when the sheet-like buffer material is processed into a buffer material having a three-dimensional shape by carrying out a process of deep drawing or the like can be further improved, and occurrence of wrinkles or breakage can be more effectively prevented.

The BET specific surface area of the buffer material is not particularly limited, but is preferably 0.30 m²/g or greater and 0.50 m²/g or less, more preferably 0.33 m²/g or greater and 0.47 m²/g or less, and still more preferably 0.35 m²/g or greater and 0.45 m²/g or less.

The BET specific surface area thereof decreases as the amount of the binding material to adhere to the surface of the fiber increases. The strength of the fibers increases as the adhesion amount increases, and thus the buffer material is made more preferable.

Further, the buffer material of the present embodiment may have a portion formed of a material that does not satisfy the above-described conditions in addition to a portion formed of a material that satisfies the above-described conditions. In this case, examples of the portion formed of a material that does not satisfy the above-described conditions include a portion formed of a core material, a coating layer, or a nonwoven fabric sheet described below. Here, the proportion of the material that satisfies the above-described conditions in the entire buffer material is preferably 50% by volume or greater, more preferably 80% by volume or greater, and still more preferably 90% by volume or greater.

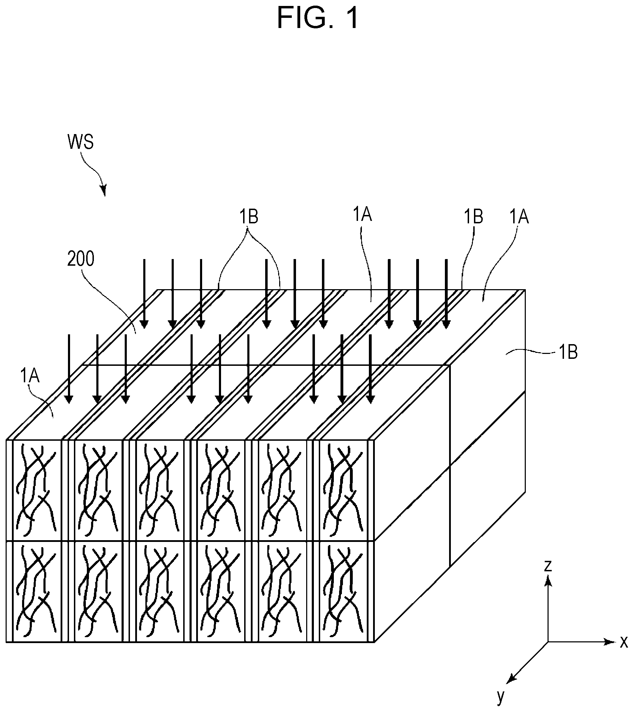

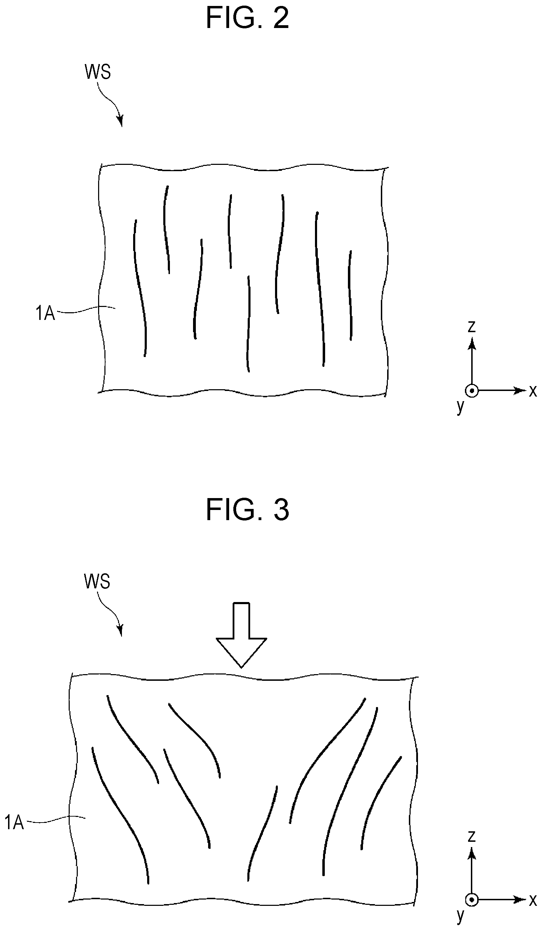

Hereinafter, suitable embodiments of the buffer material will be described in more detail with reference to the accompanying drawings. FIG. 1 is a perspective view showing a buffer material according to a suitable embodiment. FIG. 2 is a partially enlarged cross-sectional view which is a view for describing the buffer function and showing the buffer material of FIG. 1. FIG. 3 is a partially enlarged cross-sectional view which is a view for describing the buffer function and showing the buffer material of FIG. 1.

For convenience of the description, three axes orthogonal to each other are denoted as an x-axis, a y-axis, and a z-axis as shown in FIGS. 1 to 3. Further, an xy plane having the x-axis and the y-axis is horizontal, and the z-axis is vertical to the plane. Further, a direction in which an arrow of each axis is oriented is referred to as "+", and a direction opposite to the direction is referred to as "-".

As shown in FIG. 1, a buffer material WS of the present embodiment includes six buffer sheets 1A and nonwoven fabric sheets 1B respectively provided on both surface sides of the buffer sheets 1A. In the present embodiment, the buffer material WS is used in a state where six buffer sheets 1A provided with the nonwoven fabric sheets 1B on both surface sides thereof are superimposed in an x-axis direction.

First, the buffer sheet 1A will be described.

The buffer sheet 1A contains cellulose fibers and the binding material described above.

The content of the cellulose fibers in the buffer sheet 1A is preferably 60.0% by mass or greater and 89.0% by mass or less, more preferably 63.0% by mass or greater and 87.0% by mass or less, and still more preferably 65.0% by mass or greater and 84.0% by mass or less.

In this manner, the strength and the buffering performance of the buffer material WS can be further improved.

The content of the binding material in the buffer sheet 1A is preferably 11.0% by mass or greater and 40.0% by mass or less, more preferably 13.0% by mass or greater and 37.0% by mass or less, and still more preferably 16.0% by mass or greater and 35.0% by mass or less.

In this manner, the above-described effects are more significantly exhibited.

As shown in FIG. 1, the buffer sheet 1A has a sheet shape as a whole. The thickness of the buffer sheet 1A is not particularly limited, but is preferably 1.0 mm or greater and 100 mm or less, more preferably 1.5 mm or greater and 30 mm or less, and still more preferably 2.0 mm or greater and 20 mm or less.

In this manner, the strength and the rigidity of the buffer material WS can be further improved. Further, for example, the workability when the sheet-like buffer material WS is processed into a buffer material WS having a three-dimensional shape by carrying out a process of deep drawing or the like can be further improved, and occurrence of wrinkles or breakage can be more effectively prevented.

Next, the nonwoven fabric sheets 1B will be described.

In the present embodiment, the nonwoven fabric sheets 1B are respectively provided on both surface sides of the buffer sheet 1A. The nonwoven fabric sheets 1B are bonded to the buffer sheet 1A. Since the respective nonwoven fabric sheets 1B have the same configuration, one nonwoven fabric sheet 1B will be described below.

As described above, the both surfaces of the buffer sheet 1A are covered with the nonwoven fabric sheet 1B, and thus it is possible to prevent or suppress powder of the cellulose fibers or the like of the buffer sheet 1A from being scattered. Therefore, adhesion of powder of the cellulose fibers or the like to an object to be protected can be prevented or suppressed. Further, as described above, it is possible to prevent or suppress paper powder from being scattered in the middle of the production. In addition, the buffer sheet 1A can be reinforced so that buckling deformation of the buffer sheet 1A can be prevented or suppressed.

The constituent material for the fibers constituting the nonwoven fabric sheet 1B is not particularly limited, and it is preferable that the nonwoven fabric sheet 1B be formed of one or two or more kinds of materials selected from the group consisting of resin materials such as nylon, polyethylene terephthalate, polypropylene, and polytetrafluoroethylene, inorganic materials such as glass, alumina, and carbon, and materials derived from the nature (natural fibers) such as metal materials, cellulose, and pulp.

Among these, it is preferable that the fibers contained in the nonwoven fabric sheet be natural fibers. In this manner, adverse effects on the environment at the time of disposal of the buffer material WS can be reduced.

Particularly, it is preferable that the fibers constituting the nonwoven fabric sheet 1B be the same as the cellulose fibers used for the buffer sheet 1A.

Further, it is preferable that the average length of the fibers constituting the nonwoven fabric sheet 1B be greater than the average length of the cellulose fibers contained in the buffer sheet 1A. In this manner, it is possible to prevent or suppress paper powder from being scattered from the nonwoven fabric sheet 1B.

The average length of the fibers constituting the nonwoven fabric sheet 1B is not particularly limited, but is preferably 12 µm or greater and 60 mm or less, more preferably 25 µm or greater and 6.0 mm or less, and still more preferably 40 µm or greater and 4.0 mm or less in terms of the length-length weighed average cellulose fiber length.

In this manner, it is possible to effectively prevent or suppress the cellulose fibers of the buffer sheet 1A from being scattered from between the fibers constituting the nonwoven fabric sheet 1B.

When the fibers constituting the nonwoven fabric sheet 1B are considered to be one independent cellulose fiber, the average thickness thereof is preferably 1.0 µm or greater and 1000 µm or less and more preferably 2.0 µm or greater and 100.0 µm or less.

In this manner, it is possible to effectively prevent or suppress the cellulose fibers of the buffer sheet 1A from being scattered from between the fibers constituting the nonwoven fabric sheet 1B.

The average aspect ratio of the fibers constituting the nonwoven fabric sheet 1B, that is, the average length with respect to the average thickness thereof is not particularly limited, but is preferably 10 or greater and 1000 or less and more preferably 15 or greater and 500 or less.

Further, the nonwoven fabric sheet 1B may contain a binding material that binds the fibers. The binding material is not particularly limited and can be appropriately selected from, for example, those exemplified as the binding material contained in the buffer sheet 1A and then used.

The thickness (average thickness) of the nonwoven fabric sheet 1B is not particularly limited, but is preferably 0.1 mm or greater and 5 mm or less, more preferably 0.3 mm or greater and 3 mm or less, and still more preferably 0.5 mm or greater and 2 mm or less.

In this manner, it is possible to more effectively prevent or suppress powder of the cellulose fibers or the like of the buffer sheet 1A from being scattered.

The thickness of the nonwoven fabric sheet 1B is preferably 5% or greater and 90% or less and more preferably 10% or greater and 80% or less of the thickness of the buffer sheet 1A. In this manner, it is possible to more reliably prevent or suppress powder of the cellulose fibers or the like of the buffer sheet 1A from being scattered.

Further, the density of the nonwoven fabric sheet 1B is preferably 0.01 g/cm³ or greater and 0.05 g/cm³ or less and more preferably 0.02 g/cm³ or greater and 0.04 g/cm³ or less. In this manner, it is possible to more effectively prevent or suppress powder of the cellulose fibers or the like of the buffer sheet 1A from being scattered and to sufficiently ensure the buffering performance of the buffer sheet 1A.

Further, the basis weight of the nonwoven fabric sheet 1B is less than the basis weight of the cellulose fibers in the buffer sheet 1A. In this manner, it is possible to prevent or suppress the buffering performance of the buffer sheet 1A from being decreased due to the nonwoven fabric sheet 1B.

Further, the basis weight of the nonwoven fabric sheet 1B is preferably 10 g/m² or greater and 300 g/m² or less, more preferably 20 g/m² or greater and 200 g/m² or less, and still more preferably 30 g/m² or greater and 100 g/m² or less. In this manner, it is possible to more effectively prevent or suppress powder of the cellulose fibers or the like of the buffer sheet 1A from being scattered and to sufficiently ensure the buffering performance of the buffer sheet 1A.

Further, when sixteen nonwoven fabric sheets 1B each having a thickness of 0.5 mm are superimposed and 300 cc of air is blown thereto at a speed of 10 cm/sec, the time required to permeate the air through the nonwoven fabric sheets 1B is preferably 0.5 seconds or longer and 2.0 seconds or shorter and more preferably 0.7 seconds or longer and 1.7 seconds or shorter.

According to such a nonwoven fabric sheet 1B, the nonwoven fabric sheet 1B can prevent or suppress powder (paper powder) of the cellulose fibers or the like of the buffer sheet 1A from being scattered. Therefore, adhesion of paper powder to an object to be protected can be prevented or suppressed. Further, as described above, it is possible to prevent or suppress paper powder from being scattered in the middle of the production.

Further, in the present embodiment, the nonwoven fabric sheets 1B are respectively provided on both surface sides of the buffer sheet 1A, but the nonwoven fabric sheet 1B may be provided only on one surface side thereof.

As described above, the buffer material WS is formed such that the buffer sheets 1A provided with the nonwoven fabric sheets 1B on both surface sides thereof are laminated in the x-axis direction. Further, the upper surface in FIG. 1, that is, the surface parallel to the xy plane positioned on a +z-axis side is a pressure receiving surface 200 that receives an external force from an object to be protected.

Further, the cellulose fibers in the buffer sheet 1A are aligned in a plane direction of a yz plane, that is, a direction intersecting the thickness direction of the buffer sheet 1A. The expression "cellulose fibers are aligned in a direction intersecting the thickness direction of the buffer sheet 1A" denotes that a main alignment direction of the cellulose fibers is a direction along the plane direction of the buffer sheet 1A.

More specifically, the alignment degree in the x-axis direction is less than the alignment degree in a y-axis direction and the alignment degree in a z-axis direction. Further, the cellulose fibers are randomly aligned in the yz plane. Here, the alignment degree in the z-axis direction may be greater than the alignment degree in the y-axis direction.

The alignment direction of the cellulose fibers is acquired by a method of observing the surface of the buffer sheet 1A under conditions of a magnification of 200 times or greater and 500 times or less using a digital microscope (VHX5000, manufactured by KEYENCE CORPORATION). Further, 50 fibers are randomly selected from the cellulose fibers observed with the digital microscope, the alignment directions using the observed surface as a reference are measured, the average value thereof is calculated, and the obtained direction is defined as the alignment direction of the cellulose fibers.

When described from a different viewpoint, the number of fibers in which the alignment direction of the cellulose fiber is a predetermined direction is defined as T1, the number of cellulose fibers in which the alignment direction is a direction different from the predetermined direction is defined as T2, and a ratio T1/T2 is acquired. Therefore, the proportion of the number of cellulose fibers in the predetermined direction can be acquired. Further, a predetermined direction in which the proportion of the number of cellulose fibers is the highest can be defined as the alignment direction of the cellulose fibers.

When an external force is applied to such a buffer material WS from an object to be protected, first, the external force is transmitted to the buffer sheet 1A. In the buffer sheet 1A, the fibers are aligned in the plane direction of the y-z plane as described above. Therefore, when an external force is applied from the +z-axis side to the buffer sheet 1A, particularly the cellulose fibers oriented in the z-axis direction move from a state shown in FIG. 2 to a state shown in FIG. 3, that is, to ±x-axis sides or ±y-axis sides in order to avoid the external force. Since the fibers are dissociated from each other from a state where the fibers are bound by the binding material due to the movement of the fibers, the impact energy of the external force is consumed, and the external force is relaxed and absorbed. As a result, an excellent buffer function can be exhibited.

Further, the fibers move in a direction different from the direction in which the external force is received, and thus the fibers are unlikely to be densified. Therefore, the buffer function can be sufficiently exhibited even when the buffer material WS is repeatedly used.

As described above, the buffer material WS includes the buffer sheet 1A that contains cellulose fibers and a binding material binding the cellulose fibers and has a sheet shape, and the nonwoven fabric sheet 1B that is provided on at least one surface side of the buffer sheet 1A and is formed of nonwoven fabric. Further, the cellulose fibers are aligned in a direction intersecting the thickness direction of the buffer sheet 1A, and the alignment direction of the cellulose fibers is along a direction in which an external force is received. In this manner, the cellulose fibers easily move when an impact is applied to the buffer material WS, and thus the buffer function can be exhibited due to this movement. Further, since at least one surface of the buffer sheet 1A is covered with the nonwoven fabric sheet 1B, it is possible to prevent or suppress paper powder from being scattered. According to the buffer material WS, it is possible to prevent or suppress paper powder from being scattered while the buffering performance is enhanced, as described above.

Further, since the buffer material WS is produced by a production device 100 described below, the buffer material WS does not adversely affect the environment and has excellent recyclability.

Further, the alignment direction of the fibers in the nonwoven fabric sheet 1B is the same as the alignment direction of the cellulose fibers in the buffer sheet 1A. In this manner, the cellulose fibers easily move even in the nonwoven fabric sheet 1B when an impact is applied to the buffer material WS, and thus the buffer function can be exhibited due to this movement. Accordingly, the buffering performance of the buffer material WS can be further enhanced.

### 2. Method of producing buffer material

Next, a method of producing the buffer material will be described.

The method of producing the buffer material according to the present embodiment includes a defibration step of defibrating a raw material containing cellulose fibers by dry type defibration, a mixing step of mixing the cellulose fibers defibrated in the defibration step with a binding material in a gas phase to obtain a mixture, a molding step of compressing the mixture to form a sheet, and a lamination step of laminating the sheet. Further, starch and natural wax are used as the binding material.

In this manner, it is possible to provide a method of suitably producing the above-described buffer material, that is, the buffer material which is capable of reducing the environmental load and being suitably recycled and has excellent buckling resistance.

### 2-1. Defibration step

In the defibration step, a raw material containing cellulose fibers is defibrated by dry type defibration.

Examples of the material to be defibrated which is the raw material provided for the defibration step include cellulose fibers obtained by being entangled or bound, such as pulp sheets, paper, used paper, tissue paper, kitchen paper, cleaners, filters, liquid absorbing materials, sound absorbing bodies, buffer materials, mats, and corrugated cardboard.

For example, an impeller mill can be suitably used in the defibration step.

### 2-2. Mixing step

In the mixing step, a mixture is obtained by mixing the cellulose fibers defibrated in the defibration step with the binding material in a gas phase. Here, the expression of "in a gas phase" may denote in the air or in a gas other than the air, for example, in nitrogen gas or in inert gas.

The present step may be performed, for example, at a plurality of stages. More specifically, for example, starch and natural wax may be mixed with cellulose fibers at different timings.

Further, components other than the cellulose fibers and the binding material may be mixed together. Examples of such components are those described in the section of 1-3 above. 2-3. Molding step

In the molding step, the mixture obtained in the mixing step is compressed to form a sheet.

The molding step can be suitably performed by carrying out a heat treatment and a pressure treatment on the mixture.

The present step can be performed by a heat press, a heat roller, a three-dimensional molding machine, or the like.

The heating temperature in the present step is preferably 160°C or higher, more preferably 165°C or higher and 250°C or lower, and still more preferably 170°C or higher and 220°C or lower.

In this manner, the binding material can efficiently form binding of the cellulose fibers while unexpected modification, deterioration, or the like of the constituent components of the buffer material is effectively prevented, the productivity of the buffer material can be further improved, and the strength, the buffering performance, and the like of the buffer material can be further improved. Further, it is also preferable that the heating temperature be in the above-described ranges even from the viewpoint of energy saving.

The pressing pressure in the present step is preferably 0.50 MPa or less, more preferably 0.01 MPa or greater and 0.45 MPa or less, and still more preferably 0.05 MPa or greater and 0.40 MPa or less.

In this manner, the binding material can efficiently form binding of the cellulose fibers while the buffer material to be produced is allowed to have a moderate amount of voids, and thus the strength, the buffering performance, and the like of the buffer material can be further improved. Further, it is also preferable that the pressing pressure be in the above-described ranges even from the viewpoint of energy saving.

The heating and pressing time in the present step is preferably 1 second or longer and 300 seconds or shorter, more preferably 10 seconds or longer and 60 seconds or shorter, and still more preferably 15 seconds or longer and 45 seconds or shorter.

In this manner, the productivity of the buffer material can be further improved, and the strength, the buffering performance, and the like of the buffer material can be further improved. It is also preferable that the heating and pressing time be in the above-described ranges even from the viewpoint of energy saving.

### 2-4. Lamination step

In the lamination step, the sheet obtained in the molding step is laminated.

In the lamination step, a plurality of the sheets may be laminated or one long sheet may be laminated by winding up.

Further, the sheets may be laminated in the lamination step such that the sheets are in contact with each other or a layer other than the sheet may be sandwiched between the sheets. More specifically, for example, a nonwoven fabric sheet may be sandwiched between the sheets adjacent to each other in the lamination direction.

The laminate may be subjected to a heat treatment or a pressure treatment for the purpose of increasing the adhesion strength of each layer.

The pressure when the laminate is pressed is preferably 0.50 MPa or less, more preferably 0.01 MPa or greater and 0.45 MPa or less, and still more preferably 0.05 MPa or greater and 0.40 MPa or less.

The heating temperature when the laminate is heated is preferably 160°C or higher, more preferably 165°C or higher and 250°C or lower, and still more preferably 170°C or higher and 220°C or lower.

The time of heating and pressing the laminate is preferably 1 second or longer and 300 seconds or shorter, more preferably 10 seconds or longer and 60 seconds or shorter, and still more preferably 15 seconds or longer and 45 seconds or shorter.

### 2-5. Other steps

The method of producing a buffer material may further include other steps in addition to the above-described steps. Examples of such steps include a cutting step of cutting the produced buffer material into an appropriate size and an appropriate shape.

### 2-6. Production device

Next, a production device that can be used for production of the buffer material WS will be described.

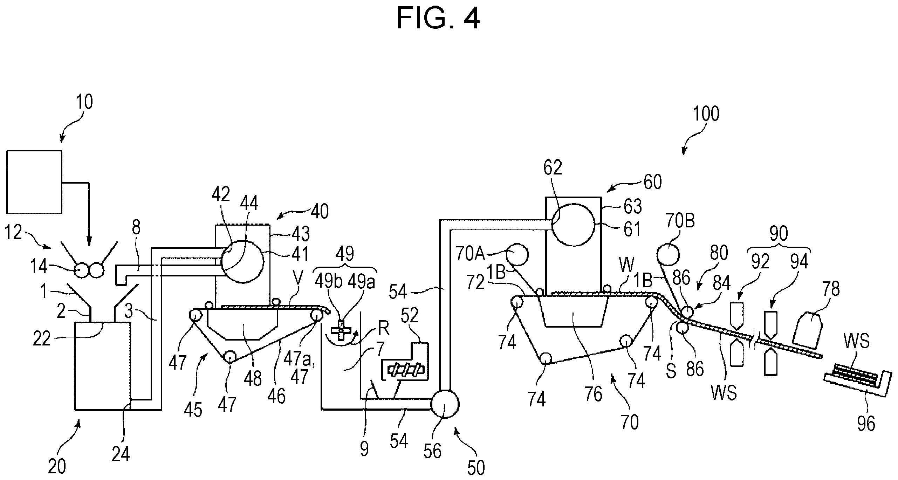

FIG. 4 is a view schematically showing an example of a production device capable of producing the buffer material WS.

As shown in FIG. 4, a production device 100 includes a supply unit 10, a crushing unit 12, a defibrating unit 20, a sorting unit 40, a first web forming unit 45, a rotating body 49, a mixing unit 50, an accumulating unit 60, a second web forming unit 70, a buffer material forming unit 80, a cutting unit 90, and a humidifying unit 78.

The supply unit 10 supplies the raw material to the crushing unit 12. The supply unit 10 is an automatic charging unit for continuously charging the crushing unit 12 with the raw material. The raw material to be supplied to the crushing unit 12 may contain the cellulose fibers.

The crushing unit 12 cuts the raw material supplied by the supply unit 10 in the atmosphere, for example, in the air to form small pieces. As the shape and the size of the small pieces, small pieces with a size of several cm square may be exemplified. In the example shown in the figure, the crushing unit 12 includes crushing blades 14, and the raw material added to the crushing unit 12 can be cut by the crushing blades 14. For example, a shredder is used as the crushing unit 12. The raw material cut by the crushing unit 12 is received by a hopper 1 and transported to the defibrating unit 20 through a pipe 2.

The defibrating unit 20 defibrates the raw material cut by the crushing unit 12. Here, the term "defibrate" denotes that the raw material formed by binding a plurality of cellulose fibers, that is, a material to be defibrated is loosened into individual cellulose fibers. The defibrating unit 20 also has a function of separating substances, such as resin particles, an ink, a toner, a filler, and a bleeding inhibitor, adhering to the raw material from the cellulose fibers.

The material having passed through the defibrating unit 20 is referred to as "defibrated material". In some cases, "defibrated material" contains, in addition to the loosened cellulose fibers, resin particles separated from the cellulose fibers during loosening of the cellulose fibers, a coloring agent such as an ink, a toner, or a filler, and an additive such as a bleeding inhibitor or a paper strength enhancer. Examples of the resin particles separated from the cellulose fibers include particles containing a resin for binding a plurality of cellulose fibers.

The defibrating unit 20 performs dry type defibration. A treatment of performing defibration or the like in a gas phase, for example, in the air without performing wet type defibration of dissolving a material in a liquid such as water in a slurry form is referred to as dry type defibration. In the present embodiment, an impeller mill is used as the defibrating unit 20. The defibrating unit 20 has a function of generating an air flow that sucks the raw material and discharges the defibrated material. In this manner, the defibrating unit 20 can suck the raw material from an introduction port 22 together with the air flow, perform the defibration treatment, and transport the defibrated material to a discharge port 24 by the air flow generated by itself. The defibrated material that has passed through the defibrating unit 20 is transferred to the sorting unit 40 through the pipe 3. Further, as the air flow for transporting the defibrated material to the sorting unit 40 from the defibrating unit 20, the air flow generated by the defibrating unit 20 may be used or an airflow generating device such as a blower is provided and an air flow generated by the device may be used.

The sorting unit 40 introduces the defibrated material defibrated by the defibrating unit 20 from the introduction port 42 and sorts out the defibrated material according to the length of the cellulose fibers. The sorting unit 40 includes a drum portion 41 and a housing unit 43 that accommodates the drum portion 41. For example, a sieve is used as the drum portion 41. The drum portion 41 has a net and can divide the defibrated material into a first sorted material that is cellulose fibers or particles having a size smaller than the size of the mesh of the net and thus passing through the net and a second sorted material that is cellulose fibers, undefibrated pieces, or lumps having a size greater than the size of the mesh of the net and thus not passing through the net. For example, the first sorted material is transferred to the mixing unit 50 through the pipe 7. The second sorted material is returned to the defibrating unit 20 from a discharge port 44 through a pipe 8. Specifically, the drum portion 41 is a cylindrical sieve rotationally driven by a motor. As the net of the drum portion 41, for example, a wire net, an expanded metal obtained by expanding a metal plate with cuts, or a punching metal in which holes are formed in a metal plate with a press machine or the like is used.

The first web forming unit 45 transports the first sorted material having passed through the sorting unit 40 to the mixing unit 50. The first web forming unit 45 includes a mesh belt 46, a stretching roller 47, and a suction unit 48.

The suction unit 48 can suck the first sorted material having passed through the opening of the sorting unit 40, that is, the opening of the net and dispersed in the air, onto the mesh belt 46. The first sorted material is accumulated on the moving mesh belt 46 to form a web V. The basic configurations of the mesh belt 46, the stretching roller 47, and the suction unit 48 are the same as the configurations of a mesh belt 72, a stretching roller 74, and a suction mechanism 76 of the second web forming unit 70 described below.

The web V passes through the sorting unit 40 and the first web forming unit 45 and is thus formed in a soft and inflated state due to containing a large amount of air. The pipe 7 is charged with the web V accumulated on the mesh belt 46, and the web V is transported to the mixing unit 50.

The rotating body 49 can cut the web V before the web V is transported to the mixing unit 50. In the example shown in the figure, the rotating body 49 includes a base portion 49a and protrusions 49b protruding from the base portion 49a. The protrusions 49b have, for example, a plate shape. In the example shown in the figure, four protrusions 49b are provided and the four protrusions 49b are provided at equal intervals. Since the base portion 49a rotates in a direction R, the protrusions 49b can rotate using the base portion 49a as an axis. Since the web V is cut by the rotating body 49, for example, a fluctuation in amount of the defibrated material supplied to the accumulating unit 60 per unit time can be reduced.

The rotating body 49 is provided in the vicinity of the first web forming unit 45. In the example shown in the figure, the rotating body 49 is provided in the vicinity of the stretching roller 47a positioned on the downstream in the path of the web V, that is, next to the stretching roller 47a. The rotating body 49 is provided at a position where the protrusions 49b can come into contact with the web V and does not come into contact with the mesh belt 46 on which the web V is accumulated. The shortest distance between the protrusions 49b and the mesh belt 46 is, for example, 0.05 mm or greater and 0.5 mm or less.

The mixing unit 50 mixes the first sorted material having passed through the sorting unit 40, that is, the first sorted material transported by the first web forming unit 45 with an additive containing the binding material. The mixing unit 50 includes an additive supply unit 52 that supplies the additive, a pipe 54 that transports the first sorted material and the additive, and a blower 56. In the example shown in the figure, the additive is supplied to the pipe 54 through the hopper 9 from the additive supply unit 52. The pipe 54 is coupled to the pipe 7.

The mixing unit 50 allows the blower 56 to generate an air flow so that the first sorted material and the additive can be transported while being mixed with each other in the pipe 54. Further, the mechanism of mixing the first sorted material and the additive is not particularly limited, and the first sorted material and the additive may be mixed by being stirred using a blade rotating at a high speed or may be mixed by using rotation of a container as in a case of a V type mixer.

A screw feeder as shown in FIG. 4 or a disc feeder which is not shown in the figure is used as the additive supply unit 52. The additive supplied from the additive supply unit 52 contains the above-described binding material. The plurality of cellulose fibers have not been bound at the time point when the binding material is supplied. The binding material is partially melted while passing through the buffer material forming unit 80 so that the plurality of cellulose fibers in the surface region of the buffer material WS are bound.

Further, the additive to be supplied from the additive supply unit 52 may contain, in addition to the binding material, a colorant for coloring the cellulose fibers, an aggregation inhibitor for suppressing aggregation of the cellulose fibers or aggregation of the natural binding material, and a flame retardant for making the cellulose fibers and the like difficult to burn, depending on the type of the buffer material WS to be produced. In the configuration shown in the figure, the production device 100 includes only one additive supply unit 52, but the production device 100 may include a plurality of additive supply units 52. In this case, for example, additives respectively supplied from the additive supply units 52 may be under different conditions. More specifically, for example, the production device may include a first additive supply unit for adding starch and a second additive supply unit for adding natural wax. The composition for producing a buffer material which is the mixture having passed through the mixing unit 50, that is, the mixture of the first sorted material and the additive is transferred to the accumulating unit 60 through the pipe 54.

The accumulating unit 60 introduces the mixture having passed through the mixing unit 50 from the introduction port 62, loosens the defibrated material of the entangled cellulose fibers, and drops the mixture while dispersing the mixture in the air. In this manner, the accumulating unit 60 can uniformly accumulate the mixture on the second web forming unit 70.

The accumulating unit 60 includes a drum portion 61 and a housing unit 63 that accommodates the drum portion 61. A cylindrical rotating sieve is used as the drum portion 61. The drum portion 61 has a net and drops the cellulose fibers or particles which are contained in the mixture having passed through the mixing unit 50 and have a size smaller than the size of the mesh of the net. The configuration of the drum portion 61 is the same as the configuration of the drum portion 41.

Further, "sieve" of the drum portion 61 may not have a function of sorting out a specific object. That is, "sieve" used as the drum portion 61 denotes a portion provided with a net, and the drum portion 61 may drop the entire mixture introduced to the drum portion 61.

The second web forming unit 70 accumulates the material having passed through the accumulating unit 60 to form a web W which is an accumulated material serving as the buffer material WS. Further, the alignment direction of the cellulose fibers in the web W is along the plane direction.

The second web forming unit 70 includes a nonwoven fabric sheet supply unit 70A and a nonwoven fabric sheet supply unit 70B that supply the nonwoven fabric sheet 1B, the mesh belt 72, the stretching roller 74, and the suction mechanism 76.

The nonwoven fabric sheet supply unit 70A is a roller that develops and delivers the nonwoven fabric sheet 1B wound in a roll shape. The nonwoven fabric sheet supply unit 70A is disposed above the mesh belt 72 and on the upstream of the mesh belt 72 in the transport direction. The nonwoven fabric sheet 1B developed and delivered by the nonwoven fabric sheet supply unit 70A is supplied onto the mesh belt 72.

The mesh belt 72 accumulates the material having passed through the opening of the accumulating unit 60, that is, the opening of the net while moving. The mesh belt 72 is configured to be stretched by the stretching roller 74 and circulate the air to make the material having passed through the accumulating unit difficult to pass through. The mesh belt 72 moves by rotation of the stretching roller 74. The mesh belt 72 continuously drops and accumulates the material having passed through the accumulating unit 60 while continuously moving and transporting the nonwoven fabric sheet 1B on the mesh belt 72, and thus the web W is formed at the nonwoven fabric sheet 1B. The mesh belt 72 is made of, for example, a metal, a resin, cloth, or nonwoven fabric.

The suction mechanism 76 is provided below the mesh belt 72, that is, on a side opposite to the side of the accumulating unit 60. The suction mechanism 76 can generate an air flow flowing downward, that is, an air flow flowing to the mesh belt 72 from the accumulating unit 60. The mixture dispersed in the air by the accumulating unit 60 can be sucked onto the nonwoven fabric sheet 1B on the mesh belt 72 by the suction mechanism 76. In this manner, the discharge rate of the material from the accumulating unit 60 can be increased. Further, the suction mechanism 76 can form a downflow in the path where the mixture falls, and thus it is possible to suppress the defibrated material and the additive from being entangled with each other during the fall.

The nonwoven fabric sheet supply unit 70B is a roller that develops and delivers the nonwoven fabric sheet 1B wound in a roll shape. The nonwoven fabric sheet supply unit 70B is disposed above the mesh belt 72 and on the upstream of the mesh belt 72 in the transport direction. The nonwoven fabric sheet 1B developed and delivered by the nonwoven fabric sheet supply unit 70A is supplied onto the web W accumulated on the nonwoven fabric sheet 1B. In this manner, a laminate S in which the nonwoven fabric sheet 1B, the web W, and the nonwoven fabric sheet 1B are laminated in order is generated. The laminate S is transported to the buffer material forming unit 80.

Further, the alignment direction of the fibers in the nonwoven fabric sheet is along the plane direction.

As described above, the laminate S in which the nonwoven fabric sheet 1B, the web W, and the nonwoven fabric sheet 1B are laminated in order is formed by carrying out the web forming step performed by the accumulating unit 60 and the second web forming unit 70.

The thickness of the web W is preferably 2.0 mm or greater and 150 mm or less, more preferably 3.0 mm or greater and 120 mm or less, and still more preferably 5.0 mm or greater and 100 mm or less.

Further, the density of the web W is preferably 0.01 g/cm³ or greater and 0.05 g/cm³ or less and more preferably 0.02 g/cm³ or greater and 0.04 g/cm³ or less.

Further, the basis weight of the web W is preferably 20 g/m² or greater and 7500 g/m² or less, more preferably 30 g/m² or greater and 6000 g/m² or less, and still more preferably 50 g/m² or greater and 5000 g/m² or less.

The buffer material forming unit 80 forms the buffer material WS by heating the web W accumulated on the nonwoven fabric sheet 1B provided on the mesh belt 72. The buffer material forming unit 80 heats the web W which is the accumulated material of the mixture of the defibrated material and the additive mixed in the second web forming unit 70, and thus the natural binding material is softened and melted. In this manner, the plurality of cellulose fibers are bound to each other. Further, the fibers constituting the nonwoven fabric sheet 1B and the cellulose fibers contained in the web W can be bound by the binding material contained in the web W. In this manner, the buffer sheet 1A and the nonwoven fabric sheet 1B can be suitably bonded to each other, and thus the buffer material WS to which the buffer sheet 1A and the nonwoven fabric sheet 1B have been bonded can be obtained.

The buffer material forming unit 80 includes a heating unit 84 that heats the web W. For example, a heat press or a heating roller may be used as the heating unit 84, and an example of using a heating roller will be described below. The number of heating rollers in the heating unit 84 is not particularly limited. In the example shown in the figure, the heating unit 84 includes a pair of heating rollers 86. The buffer material WS can be molded while the web W is continuously transported by configuring the heating unit 84 as the heating rollers 86.

The heating rollers 86 are disposed such that the rotation axes thereof are in parallel with each other. The roller radius of the heating roller 86 is preferably 2.0 cm or greater and 5.0 cm or less, more preferably 2.5 cm or greater and 4.0 cm or less, and still more preferably 2.5 cm or greater and 3.5 cm or less.

The heating rollers 86 come into contact with the laminate S and heat the laminate S while transporting the web W in a state of interposing the web W.

The rotation speed of the heating rollers 86 is, for example, preferably 20 rpm or greater and 500 rpm or less, more preferably 30 rpm or greater and 350 rpm or less, and still more preferably 50 rpm or greater and 300 rpm or less.

In this manner, the surface region of the web W can be sufficiently heated with high accuracy.

The heating rollers 86 transport the laminate S in a state of interposing the laminate S to form the buffer material WS having a predetermined thickness. Here, the pressure applied to the web W by the heating rollers 86 is preferably 0.50 MPa or less, more preferably 0.01 MPa or greater and 0.45 MPa or less, and still more preferably 0.05 MPa or greater and 0.40 MPa or less.

The surface temperature of the heating rollers 86 when the web W is heated is preferably 160°C or higher, more preferably 165°C or higher and 250°C or lower, and still more preferably 170°C or higher and 220°C or lower.

It is preferable that the gap between the pair of heating rollers 86 of the heating unit 84 be adjusted such that the thickness, the density, and the basis weight of the buffer material WS satisfy the conditions described in the section 1-4.

The production device 100 of the present embodiment may include the cutting unit 90 as necessary. In the example shown in the figure, the cutting unit 90 is provided on the downstream of the buffer material forming unit 80. The cutting unit 90 cuts the buffer material WS molded by the buffer material forming unit 80. In the example shown in the figure, the cutting unit 90 includes a first cutting unit 92 cutting the buffer material WS in a direction intersecting the transport direction of the buffer material WS and a second cutting unit 94 cutting the buffer material WS in a direction parallel to the transport direction. The second cutting unit 94 cuts, for example, the buffer material WS having passed through the first cutting unit 92.

For example, the buffer material WS having a plurality of layers of the buffer sheets 1A as shown in FIG. 1 can be obtained by laminating a plurality of sheets of the buffer materials WS obtained by being cut and heating and pressing the laminate.

Further, the production device 100 of the present embodiment may include the humidifying unit 78. In the example shown in the figure, the humidifying unit 78 is provided on the downstream of the cutting unit 90 and on the upstream of a discharge unit 96. The humidifying unit 78 is capable of applying water or water vapor to the buffer material WS. Specific examples of the aspect of the humidifying unit 78 include an aspect of spraying mist of water or an aqueous solution, an aspect of spraying water or an aqueous solution, and an aspect of jetting water or an aqueous solution from an ink jet head for adhesion.

Since the production device 100 includes the humidifying unit 78, the buffer material WS to be formed can be humidified. In this manner, the cellulose fibers are humidified and softened. Therefore, when a container or the like is three-dimensionally molded by using the buffer material WS, wrinkles or breakage is less likely to occur. Further, since a hydrogen bond is easily formed between cellulose fibers by humidifying the buffer material WS, the density of the buffer material WS is increased, and for example, the strength can be improved.

In the example of FIG. 4, the humidifying unit 78 is provided on the downstream of the cutting unit 90, and the same effects as described above can be obtained as long as the humidifying unit 78 is provided on the downstream of the buffer material forming unit 80. That is, the humidifying unit 78 may be provided on the downstream of the buffer material forming unit 80 and on the upstream of the cutting unit 90.

The buffer material WS as shown in FIG. 4 can be obtained by superimposing a desired number of sheets of buffer materials WS described above, setting a surface in a direction intersecting the direction in which the buffer materials WS are superimposed as a pressure receiving surface, and disposing the superimposed buffer materials WS at an arbitrary location. Further, the configuration thereof is not limited to the configuration shown in the figure, and for example, the function of the buffer material can be sufficiently exhibited even when the number of buffer materials to be superimposed is only one.

Hereinbefore, the suitable embodiments of the present disclosure have been described, but the present disclosure is not limited thereto.

For example, the present disclosure has configurations that are substantially the same as the configurations described in the embodiments, for example, configurations with the same functions, the same methods, and the same results as described above or configurations with the same purposes and the same effects as described above. Further, the present disclosure has configurations in which parts that are not essential in the configurations described in the embodiments have been substituted. Further, the present disclosure has configurations exhibiting the same effects as the effects of the configurations described in the embodiments or configurations capable of achieving the same purposes as the purposes of the configurations described in the embodiments. Further, the present disclosure has configurations in which known techniques have been added to the configurations described in the embodiments.

For example, the buffer material of the present disclosure is not limited to the buffer material produced by the above-described method using the above-described production device.

More specifically, for example, the case where the buffer material is produced by using the composition for producing a buffer material that is the composition containing the cellulose fibers and the binding material has been described as a representative example in the above-described embodiments, but the buffer material may be produced by sprinkling the binding material on the cellulose fibers which have been prepared in advance and heating and pressing the cellulose fibers and the binding material.

### Examples

Hereinafter, the present disclosure will be described in more detail with reference to examples and comparative examples, but the present disclosure is not limited to the following examples.

### 3. Production of buffer material

### Example 1

A sheet-like buffer material was produced using corrugated cardboard (manufactured by Rengo Co., Ltd.) as a raw material that was a cellulose fiber source, using a mixture of 29.0 parts by mass of starch and 1.0 parts by mass of carnauba wax, which is natural wax, as a binding material, and using a production device for a buffer material with the configuration shown in FIG. 4. The content of lignin in the cellulose fibers was 1.0% by mass or less. Further, the amount of the binding material supplied was adjusted such that the blending ratio between the cellulose fibers and the binding material in the buffer material produced reached 70.0:30.0 in terms of the mass ratio. In the buffer material forming unit, the heating temperature was adjusted to 170°C, the pressing pressure was adjusted to 0.05 MPa, and the heating and pressing time was adjusted to 60 seconds.

Next, the sheet-like buffer material was cut into a size of 52 mm × 39 mm, three sheets of the cut buffer materials were superimposed, and the sheet-like buffer materials were heated and pressed in the lamination direction under conditions of a heating temperature of 170°C, a pressing pressure of 0.05 MPa, and a heating and pressing time of 60 seconds so that the sheet-like buffer materials were bonded to each other, thereby obtaining a block-like buffer material with a size of 52 mm × 39 mm × 30 mm.

Further, the cellulose fibers contained in the buffer material had an average length of 730 µm and an average thickness of 20 µm.

### Examples 2 to 9

Each block-like buffer material was produced in the same manner as in Example 1 except that the amount of each component used, that is, the content of each component in the buffer material produced was changed as listed in Table 1.

### Comparative Example 1

A block-like buffer material was produced in the same manner as in Example 1 except that only starch was used as the binding material in place of the mixture of starch and the natural component.

### Comparative Example 2

A block-like buffer material was produced in the same manner as in Example 1 except that only carnauba wax, which is natural wax, was used as the binding material in place of the mixture of starch and the natural component. The configurations of the buffer materials of the examples and the comparative examples are collectively listed in Table 1.

**Table 1**

| | Cellulose fiber | Starch | Wax | |
|---|---|---|---|---|
| | Content [% by mass] | Content [% by mass] | Type | Content [% by mass] |
| Example 1 | 70.0 | 29.0 | Carnauba wax | 1.0 |
| Example 2 | 70.0 | 29.99 | Carnauba wax | 0.01 |
| Example 3 | 70.0 | 29.95 | Carnauba wax | 0.05 |
| Example 4 | 70.0 | 29.9 | Carnauba wax | 0.1 |
| Example 5 | 70.0 | 25.0 | Carnauba wax | 5.0 |
| Example 6 | 70.0 | 20.0 | Carnauba wax | 10.0 |
| Example 7 | 70.0 | 10.0 | Carnauba wax | 20.0 |
| Example 8 | 70.0 | 29.0 | Candelilla wax | 1.0 |
| Example 9 | 70.0 | 29.0 | Rice wax | 1.0 |
| Comparative Example 1 | 70.0 | 30.0 | - | - |
| Comparative Example 2 | 70.0 | - | Carnauba wax | 30.0 |

### 4. Evaluation

### 4-1. Buckling resistance

First, four sheets of the block-like buffer materials of each example and each comparative example were prepared and allowed to stand for 120 hours in a high-temperature and high-humidity environment of 60°C and 90% RH.

Next, the surfaces with a size of 30 mm × 52 mm of the four block-like buffer materials in each example and each comparative example were disposed as the upper surface and the lower surface.

Next, a rectangular parallelepiped metal block with a weight of 5 kg was prepared and mounted on the four block-like buffer materials to straddle the buffer materials.

Here, the entire upper surface of each block-like buffer material was disposed in the vicinity of four corners of the rectangular bottom surface of the metal block so as to be in contact with the metal block such that the load was uniformly applied to the four block-like buffer materials.

The evaluation was performed according to the following evaluation criteria by removing the metal block after 120 hours and observing each block-like buffer material.
A: Buckling and deformation were not found.
B: Deformation was found, but buckling was not found, which allowed the practical use.
C: Significant deformation was caused by buckling, which did not allow the practical use.

### 4-2. Disaggregation property

The block-like buffer material of each example and each comparative example was stored in a 500 mL container with a lid which had been filled with 400 mL of water, and the container was sealed with the lid and allowed to stand for 12 hours.

Next, the contents in the container with a lid, that is, the block-like buffer material and water were added to a mixer (Oster core 16-speed blender, manufactured by Oster) and stirred for 3 minutes, the contents were transferred to a 500 mL beaker, allowed to stand for 1 minute, and visually observed, and the evaluation was performed according to the following evaluation criteria. It can be said that the buffer material can be suitably recycled as the disaggregation property is more excellent.
A: A uniform suspension was formed and aggregates were not confirmed.
C: The state of defibration was insufficient and relatively large aggregates were found.

The results are collectively listed in Table 2.

**Table 2**

| | Buckling resistance | Disaggregation property |
|---|---|---|
| Example 1 | A | A |
| Example 2 | B | A |
| Example 3 | B | A |
| Example 4 | A | A |
| Example 5 | A | A |
| Example 6 | A | A |
| Example 7 | A | A |
| Example 8 | A | A |
| Example 9 | A | A |
| Comparative Example 1 | C | A |
| Comparative Example 2 | A | C |

As listed in Table 2, a buffer material with a reduced environmental load, which was able to be suitably recycled and had excellent buckling resistance, was able to be provided in each example. On the contrary, satisfactory results were not obtained in each comparative example.

Further, a buffer material was produced in the same manner as in each example except that the content of the cellulose fibers in the buffer material was changed within a range of 60.0% by mass or greater and 89.0% by mass, the content of the binding material in the buffer material was changed within a range of 11.0% by mass or greater and 40.0% by mass or less, and the average length, the average thickness and the average aspect ratio of the cellulose fibers contained in the buffer material were respectively changed within a range of 10 µm or greater and 50 mm or less, within a range of 1.0 µm or greater and 1000 µm or less, and within a range of 10 or greater and 1000 or less. Further, these buffer materials were evaluated in the above-described manners, and the results with the same tendencies as described above were obtained.

Further, a buffer material was produced to be formed of a laminate containing nonwoven fabric as shown in FIG. 1 by using the production device shown in FIG. 4, and evaluated in the same manners as described above. As a result, the same tendencies as described above were confirmed, and it was confirmed that more excellent results than the results of the comparative examples were obtained in the present disclosure.

## Claims

1. A buffer material (WS) comprising:
cellulose fibers; and
a binding material that binds the cellulose fibers,
wherein the binding material contains starch (XS) and natural wax (XW);
a content of the cellulose fibres in the buffer material is 60.0% by mass or greater and 89.0% by mass or less;
a content of the natural wax (XW) in the buffer material is 0.1% by mass or greater and 25.0% by mass or less; and
a content of the starch (XS) in the buffer material is 10.0% by mass or greater.

2. The buffer material according to claim 1,
wherein the natural wax is carnauba wax.

3. The buffer material according to claim 1,
wherein when a content of the starch in the buffer material is set as XS% by mass, and a content of the natural wax in the buffer material is set as XW% by mass, 0.40 ≤ XS/XW ≤ 500.0.

4. A method of producing a buffer material, comprising:
a defibration step of defibrating a raw material containing cellulose fibers by dry type defibration;
a mixing step of mixing the cellulose fibers defibrated in the defibration step with a binding material in a gas phase to obtain a mixture;
a molding step of compressing the mixture to form a sheet; and
a lamination step of laminating a plurality of the sheets to form a buffer material,
wherein starch and natural wax are used as the binding material;
a content of the cellulose fibres in the buffer material is 60.0% by mass or greater and 89.0% by mass or less;
a content of the natural wax (XW) in the buffer material is 0.1% by mass or greater and 25.0% by mass or less; and
a content of the starch (XS) in the buffer material is 10.0% by mass or greater.

## Patentansprüche

1. Puffermaterial (WS), umfassend:
Zellulosefasern; und
ein Bindematerial, das die Zellulosefasern bindet,
wobei das Bindematerial Stärke (XS) und Naturwachs (XW) enthält;
ein Gehalt der Zellulosefasern in dem Puffermaterial 60,0 Masseprozent oder mehr und 89,0 Masseprozent oder weniger ist;
ein Gehalt des Naturwachses (XW) in dem Puffermaterial 0,1 Masseprozent oder mehr und 25,0 Masseprozent oder weniger ist; und
ein Gehalt der Stärke (XS) in dem Puffermaterial 10,0 Masseprozent oder mehr ist.

2. Puffermaterial nach Anspruch 1,
wobei das Naturwachs Carnaubawachs ist.

3. Puffermaterial nach Anspruch 1,
wobei, wenn ein Gehalt der Stärke in dem Puffermaterial als XS Masseprozent festgesetzt ist und ein Gehalt des Naturwachses in dem Puffermaterial als XW Masseprozent festgesetzt ist, 0,40 ≤ XS/XW ≤ 500,0.

4. Verfahren zum Herstellen eines Puffermaterials, umfassend:
einen Zerfaserungsschritt zum Zerfasern eines Rohmaterials, das Zellulosefasern enthält, durch Trockenzerfaserung;
einen Mischschritt zum Mischen der Zellulosefasern, die in dem Zerfaserungsschritt zerfasert wurden, mit einem Bindemittel in einer Gasphase, um ein Gemisch zu erhalten;
einen Formungsschritt zum Komprimieren des Gemisches, um ein Blatt zu bilden; und
einen Laminierungsschritt zum Laminieren mehrerer Blätter, um ein Puffermaterial zu bilden,
wobei Stärke und Naturwachs als das Bindematerial verwendet werden;
ein Gehalt der Zellulosefasern in dem Puffermaterial 60,0 Masseprozent oder mehr und 89,0 Masseprozent oder weniger ist;
ein Gehalt des Naturwachses (XW) in dem Puffermaterial 0,1 Masseprozent oder mehr und 25,0 Masseprozent oder weniger ist; und
ein Gehalt der Stärke (XS) in dem Puffermaterial 10,0 Masseprozent oder mehr ist.

## Revendications

1. Matériau tampon (WS) comprenant :
des fibres de cellulose ; et
un matériau de liaison liant les fibres de cellulose,
dans lequel le matériau de liaison contient de l'amidon (XS) et de la cire naturelle (XW) ;
une teneur des fibres de cellulose dans le matériau tampon représente 60,0 % en masse ou plus et 89,0 % en masse ou moins ;
une teneur de la cire naturelle (XW) dans le matériau tampon représente 0,1 % en masse ou plus et 25,0 % en masse ou moins ; et
une teneur de l'amidon (XS) dans le matériau tampon représente 10,0 % en masse ou plus.

2. Matériau tampon selon la revendication 1,
dans lequel la cire naturelle est de la cire de carnauba.

3. Matériau tampon selon la revendication 1,
dans lequel, lorsqu'une teneur de l'amidon dans le matériau tampon est fixé à XS % en masse, et qu'une teneur de la cire naturelle dans le matériau tampon est fixé à XW % en masse, 0,40 ≤ XS/XW ≤ 500,0.

4. Procédé de production d'un matériau tampon, comprenant :
une étape de défibrage consistant à défibrer un matériau brut contenant des fibres de cellulose par défibrage de type sec ;
une étape de mélange consistant à mélanger les fibres de cellulose défibrées dans l'étape de défibrage avec un matériau de liaison dans une phase gazeuse pour obtenir un mélange ;
un étape de moulage consistant à comprimer le mélange pour former une feuille ; et
une étape de stratification consistant à stratifier une pluralité de feuilles pour former un matériau tampon,
dans lequel de l'amidon et de la cire naturelle sont utilisés comme matériau de liaison ;
une teneur des fibres de cellulose dans le matériau tampon représente 60,0 % en masse ou plus et 89,0 % en masse ou moins ;
une teneur de la cire naturelle (XW) dans le matériau tampon représente 0,1 % en masse ou plus et 25,0 % en masse ou moins ; et
une teneur de l'amidon (XS) dans le matériau tampon représente 10,0 % en masse ou plus.
